# DEMANDE DE BREVET EUROPEEN

(11) **EP 4 432 266 A1**
(43) Date de publication de la demande: **18.09.2024**
(21) Numéro de dépôt: 24162553.2
(22) Date de dépôt: 11.03.2024
(51) Int. Cl.: G08G 5/00

(54) **PROCEDE ET SYSTEME DE CALCUL DE TRAJECTOIRE DE SORTIE D'UN AERONEF D'UNE SITUATION D ALERTE METEO**

(30) Priorité: 14.03.2023 FR 2302353
(71) Demandeur: Airbus SAS, 31700 Blagnac Cedex (FR)
(72) Inventeur: PASTRE, Thomas, 31300 TOULOUSE (FR); PERRIN, Fabien, 31300 TOULOUSE (FR)
(74) Mandataire: Cabinet Le Guen Maillet

(57) **Abrégé**

Dans un procédé de génération automatique de trajectoire pour sortir un aéronef en vol d'une situation d'alerte météorologique, un système : obtient des polygones représentatifs d'obstacles météorologiques ; définit (701) deux cercles centrés à droite et à gauche par rapport à position courante en vol, de rayon minimum en accord avec l'état opérationnel de l'aéronef ; identifier (702), pour chaque polygone, des côtés extérieurs candidats pour une sortie de l'aéronef; définir (703) des droites perpendiculaires aux côtés extérieurs candidats et tangentes à l'un et/ou l'autre des cercles ; déterminer (704), pour chaque droite, une position de sécurité candidate, qui est localisée à une distance de marge en dehors de tout polygone ; constituer (705) des trajectoires candidates de sortie entre la position courante en vol et chaque position de sécurité candidate; et sélectionner (709) la trajectoire candidate minimisant un temps d'exposition de l'aéronef dans tout obstacle météorologique.

## Description

### DOMAINE TECHNIQUE

La présente invention concerne un système de calcul automatique d'une trajectoire à suivre pour sortir un aéronef d'une situation d'alerte météorologique. La présente invention concerne aussi un système de calcul automatique d'une trajectoire à suivre pour faire transiter l'aéronef depuis une position géographique courante en vol, où l'aéronef est pris dans une situation d'alerte météorologique, vers une destination géoréférencée et selon une direction à suivre à destination.

### ETAT DE LA TECHNIQUE ANTERIEURE

Lorsqu'un aéronef est en vol, il peut être souhaitable de fournir une assistance automatique pour déterminer de manière automatique une trajectoire qui permette d'amener l'aéronef jusqu'à une destination géoréférencée. De nombreux obstacles sont à prendre en compte dans la détermination d'une trajectoire qui soit volable (« flyable » en anglais) : le relief du terrain, les obstacles météorologiques, les zones militaires dont le survol est interdit, l'état opérationnel de l'aéronef (dépressurisation cabine, moteur hors-service...). Une trajectoire volable est une trajectoire qui en tout point présente une marge de distance minimale (ou prédéterminée) par rapport à tout obstacle identifié (relief...) et que peut suivre l'aéronef compte tenu de son état opérationnel (dépressurisation éventuelle, perte d'un moteur...). Il est notamment souhaitable de fournir une telle assistance automatique dans le cadre de pilotage de drones.

Il est souhaitable de tenir compte du fait que, à sa position géographique courante en vol, l'aéronef soit pris dans une situation d'alerte météorologique, notamment soit parce que l'aéronef est au sein d'un nuage d'orage, soit parce que l'aéronef est entouré de nuages d'orage.

Il est ainsi souhaitable de fournir une solution permettant de trouver automatiquement une trajectoire de sortie de la situation d'alerte météorologique, ayant une consommation réduite en ressources de calcul, et en minimisant l'exposition de l'aéronef aux risques météorologiques.

### EXPOSE DE L'INVENTION

Il est alors proposé ici un premier procédé de génération de trajectoire pour sortir un aéronef en vol d'une situation d'alerte météorologique, le procédé étant implémenté par un système de génération automatique de trajectoire sous forme de circuiterie électronique, le procédé comprenant les étapes suivantes :
- obtenir un ou plusieurs polygones de la situation d'alerte météorologique qui sont représentatifs d'au moins un obstacle météorologique respectif à franchir ;
- définir deux cercles tangentiels par rapport à une direction actuelle de vol de l'aéronef, l'un étant centré à droite, l'autre étant centré à gauche, par rapport à une position courante en vol de l'aéronef, le rayon des cercles étant un rayon minimum de virage que peut effectuer l'aéronef au regard de son état opérationnel ;
- identifier, pour chaque polygone de la situation d'alerte météorologique, des côtés extérieurs candidats qui sont candidats pour une sortie de l'aéronef de la situation d'alerte météorologique ;
- définir des droites qui sont perpendiculaires aux côtés extérieurs candidats et qui tangentent l'un et/ou l'autre des cercles ;
- déterminer, pour chaque droite, une position de sécurité candidate, qui est localisée sur ladite droite à une distance au moins égale à une marge latérale prédéterminée en dehors de tout polygone représentatif d'un obstacle météorologique de la situation d'alerte météorologique ;
- constituer des trajectoires candidates, pour sortir l'aéronef de la situation d'alerte météorologique, entre la position courante en vol de l'aéronef et chaque position de sécurité candidate en suivant la droite sur laquelle est localisée la position de sécurité candidate en question et préalablement une portion de cercle jusqu'à ce que ledit cercle tangente la droite en question ; et
- effectuer un choix parmi les trajectoires candidates, en sélectionnant la trajectoire candidate la plus prometteuse au regard d'une heuristique où minimiser un temps d'exposition de l'aéronef dans tout obstacle météorologique de la situation d'alerte météorologique prévaut.

Ainsi, une trajectoire de sortie de la situation d'alerte météorologique est trouvée, de manière automatique, avec une consommation réduite en ressources de calcul, et en minimisant l'exposition de l'aéronef aux risques météorologiques.

Selon un mode de réalisation particulier, la situation d'alerte météorologique est formée d'un obstacle météorologique dans lequel se trouve la position courante en vol de l'aéronef, la position courante en vol de l'aéronef étant ainsi au sein d'un polygone de la situation d'alerte météorologique.

Selon un mode de réalisation particulier, la situation d'alerte météorologique est formée de plusieurs obstacles météorologiques entourant la position courante en vol de l'aéronef, la position courante en vol de l' aéronef étant ainsi entourée de polygones de la situation d'alerte météorologique.

Selon un mode de réalisation particulier, le procédé comporte l'étape suivante :
- fusionner les polygones de la situation d'alerte météorologique entourant la position courante en vol de l'aéronef, avant d'identifier les côtés extérieurs candidats.

Selon un mode de réalisation particulier, le procédé comporte en outre l'étape suivante :
- obtenir un ou plusieurs autres polygones qui sont représentatifs d'au moins un obstacle de relief ou de zone militaire interdite de survol,
et le procédé étant tel que chaque position de sécurité candidate est localisée à une distance au moins égale à la marge latérale prédéterminée de tout polygone.

Selon un mode de réalisation particulier, le procédé comporte l'étape suivante :
- filtrer les trajectoires candidates, de sorte à exclure toute trajectoire candidate qui ne garantit pas la marge latérale prédéterminée, par rapport à tout dit autre polygone.

Il est aussi proposé un second procédé de génération de trajectoire pour amener un aéronef en vol depuis une position courante en vol de l'aéronef à une destination géoréférencée, le procédé étant implémenté par un système de génération automatique de trajectoire sous forme de circuiterie électronique, le procédé comprenant les étapes suivantes :
- obtenir des polygones représentatifs d'obstacles potentiellement rencontrés par l'aéronef depuis la position courante de l'aéronef jusqu'à la destination géoréférencée ;
- lorsque la position courante en vol de l'aéronef n'est pas dans une situation d'alerte météorologique, rechercher une trajectoire pour amener l'aéronef depuis la position courante en vol de l'aéronef à la destination géoréférencée, par contournements de sommets des polygones obtenus, en maintenant une marge latérale prédéterminée avec tout polygone ;
- lorsque la position courante en vol de l'aéronef est dans une situation d'alerte météorologique, exécuter le premier procédé exposé ci-dessus dans l'un quelconque de ses modes de réalisation pour obtenir une trajectoire pour amener l'aéronef depuis la position courante en vol de l'aéronef à une position de sécurité, et rechercher une trajectoire pour amener l'aéronef depuis la position de sécurité à la destination géoréférencée, par contournements de sommets des polygones obtenus, en maintenant une marge latérale prédéterminée avec tout polygone.

Il est aussi proposé un premier système de génération automatique de trajectoire configuré pour générer automatiquement une trajectoire pour sortir un aéronef en vol d'une situation d'alerte météorologique, le système de génération automatique de trajectoire étant sous forme de circuiterie électronique configurée pour :
- obtenir un ou plusieurs polygones de la situation d'alerte météorologique qui sont représentatifs d'au moins un obstacle météorologique respectif à franchir ;
- définir deux cercles tangentiels par rapport à une direction actuelle de vol de l'aéronef, l'un étant centré à droite, l'autre étant centré à gauche, par rapport à une position courante en vol de l'aéronef, le rayon des cercles étant un rayon minimum de virage que peut effectuer l'aéronef au regard de son état opérationnel ;
- identifier, pour chaque polygone de la situation d'alerte météorologique, des côtés extérieurs candidats qui sont candidats pour une sortie de l'aéronef de la situation d'alerte météorologique ;
- définir des droites qui sont perpendiculaires aux côtés extérieurs candidats et qui tangentent l'un et/ou l'autre des cercles ;
- déterminer, pour chaque droite, une position de sécurité candidate, qui est localisée sur ladite droite à une distance au moins égale à une marge latérale prédéterminée en dehors de tout polygone représentatif d'un obstacle météorologique de la situation d'alerte météorologique ;
- constituer des trajectoires candidates, pour sortir l'aéronef de la situation d'alerte météorologique, entre la position courante en vol de l'aéronef et chaque position de sécurité candidate en suivant la droite sur laquelle est localisée la position de sécurité candidate en question et préalablement une portion de cercle jusqu'à ce que ledit cercle tangente la droite en question ; et
- effectuer un choix parmi les trajectoires candidates, en sélectionnant la trajectoire candidate la plus prometteuse au regard d'une heuristique où minimiser un temps d'exposition de l'aéronef dans tout obstacle météorologique de la situation d'alerte météorologique prévaut.

Il est aussi proposé un deuxième système de génération automatique de trajectoire configuré pour générer automatiquement une trajectoire pour amener un aéronef en vol depuis une position courante en vol de l'aéronef à une destination géoréférencée, le système de génération automatique de trajectoire étant sous forme de circuiterie électronique configurée pour :
- obtenir des polygones représentatifs d'obstacles potentiellement rencontrés par l'aéronef depuis la position courante de l'aéronef jusqu'à la destination géoréférencée ;
- lorsque la position courante en vol de l'aéronef n'est pas dans une situation d'alerte météorologique, rechercher une trajectoire pour amener l'aéronef depuis la position courante en vol de l'aéronef à la destination géoréférencée, par contournements de sommets des polygones obtenus, en maintenant une marge latérale prédéterminée avec tout polygone ;
- lorsque la position courante en vol de l'aéronef est dans une situation d'alerte météorologique, la circuiterie électronique est configurée selon le premier système de génération automatique de trajectoire de la revendication 8 pour obtenir une trajectoire pour amener l'aéronef depuis la position courante en vol de l'aéronef à une position de sécurité, et la circuiterie électronique est en outre configurée pour rechercher une trajectoire pour amener l'aéronef depuis la position de sécurité à la destination géoréférencée, par contournements de sommets des polygones obtenus, en maintenant une marge latérale prédéterminée avec tout polygone.

Il est aussi proposé un aéronef comportant un système de génération automatique de trajectoire selon l'un quelconque des modes de réalisation présentés ci-dessus.

Il est aussi proposé un programme d'ordinateur comportant des instructions pour implémenter le premier procédé ou le second procédé, tels qu'évoqués ci-dessus, selon l'un quelconque de leurs modes de réalisation, lorsque lesdites instructions sont exécutées par un processeur. Il est aussi proposé un support de stockage d'informations stockant des instructions pour implémenter le premier procédé ou le second procédé, tels qu'évoqués ci-dessus, selon l'un quelconque de leurs modes de réalisation, lorsque lesdites instructions sont lues depuis le support de stockage d'informations et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de côté, un aéronef équipé d'un système de génération automatique de trajectoire ;
[Fig. 2] illustre schématiquement un agencement du système de génération automatique de trajectoire ;
[Fig. 3] illustre schématiquement un algorithme de calcul de trajectoire latérale visant à amener l'aéronef depuis une position courante en vol jusqu'à une destination géoréférencée ;
[Fig. 4A] illustre schématiquement un premier motif de trajectoire entre une position courante en vol de l'aéronef et une destination à atteindre ;
[Fig. 4B] illustre schématiquement un deuxième motif possible de trajectoire entre une position courante en vol de l'aéronef et une destination à atteindre ;
[Fig. 4C] illustre schématiquement un troisième motif possible de trajectoire entre une position courante en vol de l'aéronef et une destination à atteindre ;
[Fig. 4D] illustre schématiquement un quatrième motif possible de trajectoire entre une position courante en vol de l'aéronef et une destination à atteindre ;
[Fig. 4E] illustre schématiquement, en vue de dessus, une marge latérale à respecter pour pouvoir considérer une trajectoire comme volable ;
[Fig. 5A] illustre schématiquement un premier exemple d'extension de trajectoire par contournement de sommet de polygone ;
[Fig. 5B] illustre schématiquement un deuxième exemple d'extension de trajectoire par contournement de sommet de polygone ;
[Fig. 6A] illustre schématiquement un premier exemple d'une situation où l'aéronef est pris dans une situation d'alerte météorologique ;
[Fig. 6B] illustre schématiquement un deuxième exemple d'une situation où l'aéronef est pris dans une situation d'alerte météorologique ;
[Fig. 7] illustre schématiquement un algorithme de calcul de trajectoire latérale visant à sortir l'aéronef de la situation d'alerte météorologique ; et
[Fig. 8A] illustre schématiquement différentes alternatives de sortie de la situation d'alerte météorologique ;
[Fig. 8B] illustre schématiquement une trajectoire de sortie de la situation d'alerte météorologique pour amener l'aéronef à une position de sécurité ;
[Fig. 9] illustre schématiquement un agencement de plateforme matérielle adaptée pour implémenter le système de génération automatique de trajectoire.

### EXPOSE DETAILLE DE MODES DE REALISATION

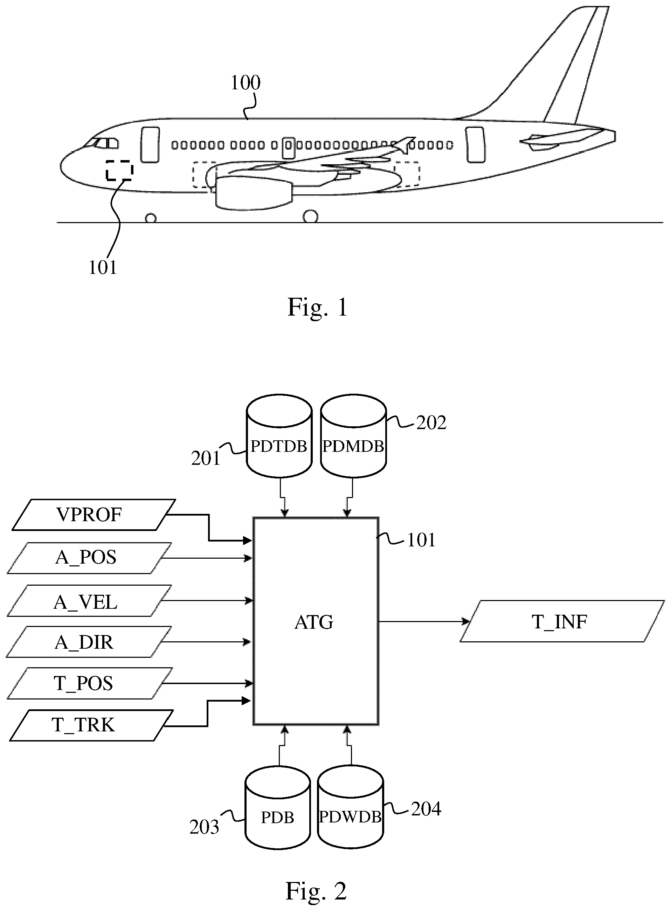

La **Fig. 1** illustre schématiquement, en vue de côté, un aéronef 100 équipé d'un système de génération automatique de trajectoire ATG (« Automatic Trajectory Generator » en anglais) 101.

Le système ATG 101 est un équipement électronique embarqué. Par exemple, le système ATG 101 fait partie d'une circuiterie électronique de l'avionique de l'aéronef 100. Préférentiellement, le système ATG 101 est intégré à un calculateur de l'aéronef 100, par exemple le système de gestion de vol FMS (« Flight Management System » en anglais) de l'aéronef 100 ou un autre système de calcul de trajectoire distinct du système de gestion de vol FMS.

Le système ATG 101 est un système d'assistance au pilotage pour déterminer en temps-réel une trajectoire sûre (« safe » en anglais), volable, à suivre pour amener l'aéronef 100 lorsque celui-ci est en vol, depuis sa position géographique courante, jusqu'à une destination géoréférencée, comme par exemple un aéroport ou une position courante de porte-avions.

Le système ATG 101 est schématiquement illustré sur la **Fig. 2****.** Le système ATG 101 est configuré pour prendre en entrée un ensemble d'informations fournies par l'avionique : la position géographique courante de l'aéronef 100 (position courante en vol, notée A_POS), la vélocité ou vitesse courante de l'aéronef 100 (notée A_VEL), la direction de vol actuelle de l'aéronef 100 (notée A_DIR) telle que définie par l'attitude (« attitude » en anglais) de l'aéronef 100, une information de position géographique de la destination (destination géoréférencée, notée T_POS) et une information de direction à suivre à destination (notée T_TRK). Dans un mode de réalisation particulier, le système ATG 101 est configuré pour prendre en outre en entrée un profil de trajectoire verticale à respecter jusqu' à destination (noté VPROF).

Le système ATG 101 est configuré pour fournir en sortie une information de trajectoire (notée T_INF).

Il est rappelé ici qu'une trajectoire volable est une trajectoire qui en tout point présente une marge de distance minimale (ou prédéterminée) par rapport à tout obstacle identifié (relief...) et que peut suivre l'aéronef 100 compte tenu de son état opérationnel (dépressurisation éventuelle, perte d'un moteur...).

Pour déterminer l'information de trajectoire T_INF, le système ATG 101 dispose en outre d'informations fournies par une ou plusieurs bases de données. Par exemple, le système ATG 101 dispose plus particulièrement : une base de données PDTDB (pour « Polygon Digital Terrain DataBase » en anglais) 201, qui fournit des informations d'élévation de terrain sous forme de polygones par tranches d'altitude ; une base de données PDMDB (pour « Polygon Digital Military DataBase » en anglais) 202, qui fournit des informations de géoréférencement, préférentiellement par tranches d'altitude, sous forme de polygones de zones militaires dont le survol est interdit ; une base de données PDWDB (pour « Polygon Digital Weather DataBase » en anglais) 204, qui fournit des informations géoréférencées sous forme de polygones, préférentiellement par tranches d'altitude, de zones à éviter à cause des conditions météorologiques (nuages d'orage...).

Préférentiellement, le système ATG 101 dispose en outre d'une base de données PDB (pour « Performance DataBase » en anglais) 203, qui fournit des informations de performances de l'aéronef 100 selon son état opérationnel.

Les bases de données susmentionnées peuvent être totalement intégrées à un système informatique de l'aéronef 100. Avant le décollage, les bases de données sont mises à jour, par exemple grâce à une sacoche de vol électronique EFB (« Electronic Flight Bag » en anglais). Les bases de données peuvent être intégrées à un système informatique au sol, par exemple un centre informatique d'une compagnie aérienne pour lequel opère l'aéronef 100. La mise à jour des bases de données est alors réalisée grâce à des communications sol - air AGC (« Air - Ground Communications » en anglais). Ces deux approches peuvent être combinées, avec un pré-chargement des bases de données avant le décollage et des mises à jour en vol, par exemple pour prendre en compte des évolutions de données en temps-réel (conditions météo...).

La base de données PDTDB 201 contient des descripteurs de polygones représentant des couches de terrain. Chaque polygone est ainsi associé à une couche d'altitude (entre une borne inférieure de couche et une borne supérieure de couche). L'ensemble des polygones est une quantification (approximation) du terrain et englobe entièrement le terrain réel, ce qui signifie que si une trajectoire évite ces obstacles polygonaux, l'application de cette trajectoire dans le monde réel évite également le relief du terrain.

Les polygones représentant une couche de terrain doivent le faire fidèlement, ce qui signifie qu'ils ne peuvent pas agrandir le terrain au point que des zones volables soient considérées comme des obstacles et que des trajectoires sûres soient alors considérées comme dangereuses et rejetées par le système ATG 101. De plus, vus de dessus, les polygones représentant le terrain d'une couche doivent être entièrement entourés par les polygones représentant le terrain dans les couches inférieures. Cette exigence est nécessaire pour supposer que plus un aéronef est haut, moins le relief du terrain est contraignant, ce qui permet d'effectuer des simplifications de calcul qui accélèrent la recherche de trajectoires.

De la même manière, les zones militaires de la base de données PDMDB 202 et les obstacles météorologiques de la base de données PDWDB 204 sont représentés sous forme de polygones qui résultent d'une quantification (approximation) de ces zones militaires et de ces obstacles météorologiques.

Dans le cas des zones militaires, une variable est préférentiellement associée avec les descripteurs des polygones correspondants et indique si la zone militaire est ouverte (survol autorisé) ou fermée (survol interdit). Cette variable peut être transmise par voie radio à l'aéronef 100 en vol pour notifier un changement de statut (ouverte / fermée) de telle ou telle zone militaire en temps-réel.

Chaque polygone est défini par ses arêtes (« edges » en anglais) et est associé à une altitude plancher et une altitude plafond (couche). Par conséquent, les bases de données stockent des descripteurs de polygone, comportant des descripteurs d'arête incluant par exemple les informations suivantes :
- Longitude et latitude d'un sommet de l'arête,
- Longitude et latitude de l'autre sommet de l'arête,
- Altitude plancher de la couche,
- Altitude plafond de la couche,
- Identifiant de polygone auquel appartient l'arête,
- Identifiant d'arête au sein du polygone.

Chaque descripteur de polygone peut ainsi être constitué de descripteurs d'arêtes consécutifs, préférentiellement présentés, de manière ordonnée, selon le sens horaire ou dans le sens antihoraire de parcours de la périphérie du polygone en question.

Dans le cas d'obstacles météorologiques, les descripteurs de polygones correspondants contiennent par exemple les informations suivantes :
- Horodatage,
- Vitesse globale de l'obstacle, avec direction de déplacement,
- Facteur de croissance.

De plus, pour plus de précisions, chaque descripteur d'arête du polygone d'obstacle météorologique peut contenir une information de vélocité, ou vitesse, de chaque sommet de l'arête. Ainsi, grâce à ces informations, le système ATG 101 est apte à extrapoler, à partir de l'instant donné par l'horodatage et grâce à un modèle météorologique, des changements dynamiques de forme des polygones en question.

Ainsi, lorsque le système ATG 101 effectue un calcul d'une trajectoire à suivre pour faire transiter l'aéronef 100 depuis une position géographique courante en vol, vers une destination géoréférencée, le système ATG 101 manipule des polygones, de sorte à réduire les besoins en ressources de calcul.

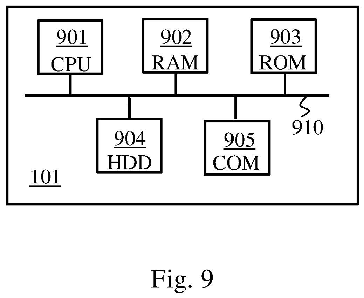

Un exemple de plateforme matérielle adaptée pour implémenter le système ATG 101 est détaillé ci-après en relation avec la Fig. 9.

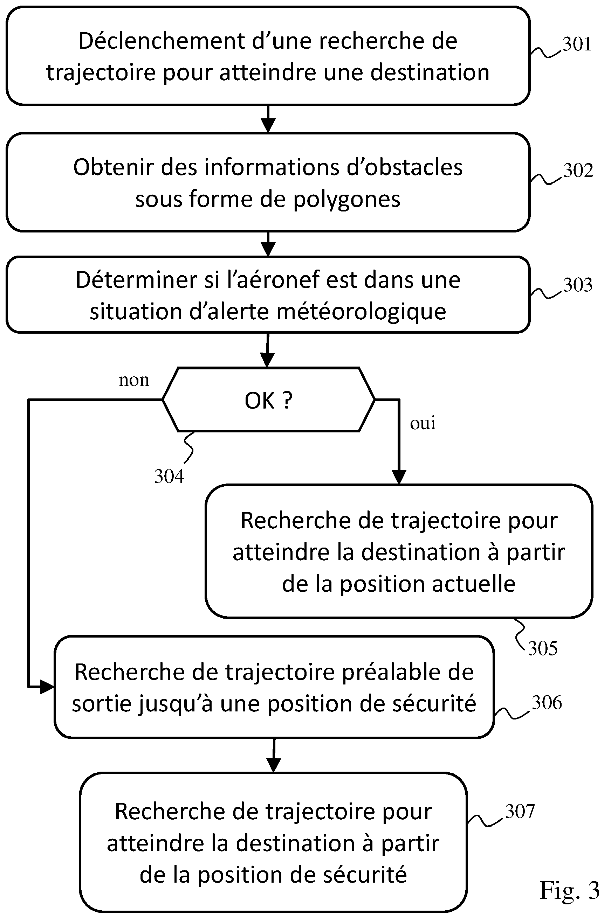

La **Fig. 3** illustre schématiquement un algorithme de calcul de trajectoire latérale visant à amener l'aéronef 100 depuis une position courante en vol A_POS jusqu'à une destination géoréférencée T_POS.

Dans une étape 301, le système ATG 101 déclenche une recherche d'une trajectoire latérale visant à amener l'aéronef 100 depuis la position courante en vol A_POS jusqu'à la destination géoréférencée T_POS. La recherche de la trajectoire latérale est initiée sur demande d'assistance au pilotage, par exemple sur instruction en provenance d'un équipement de commande du cockpit de l'aéronef 100 ou d'un équipement de l'avionique de l'aéronef 100.

Afin de pouvoir fournir une trajectoire volable qui soit facile à suivre aux instruments de navigation, le système ATG 101 construit des trajectoires candidates composées uniquement de segments de ligne et d'arcs de cercle dont le rayon est conforme aux performances de l'aéronef 100 telles que récupérées dans la base de données PDB 203.

Dans une étape 302, le système ATG 101 obtient des informations d'obstacles (terrain, météo, zones militaires) sous forme de polygones par couches d'altitude. Ces informations sous forme de polygones sont obtenues auprès des bases de données PDTDB 201, PDMDB 202 et PDWDB 204 précédemment évoquées. Par exemple, le système ATG 101 obtient des informations d'obstacles présents dans une zone géographique de surface prédéterminée qui inclut la position courante en vol A_POS de l'aéronef 100 et la destination géoréférencée T_POS. Cette zone géographique est de préférence la plus petite possible, de sorte à obtenir les informations d'obstacles présents dans une zone géographique minimale incluant la position courante en vol A_POS de l'aéronef 100 et la destination géoréférencée T_POS. Le système ATG 101 effectue un filtrage pour ne conserver que les polygones qui correspondent à l'altitude de l'aéronef 100 ou à un profil de trajectoire verticale à suivre par l'aéronef 100. Ce filtrage peut en variante être réalisé de manière externe au système ATG 101, de sorte que le système ATG 101 ne reçoive que les obstacles pertinents de la zone géographique en question.

Dans une étape 303, le système ATG 101 détermine si l'aéronef 100 est dans une situation d'alerte météorologique. Le système ATG 101 détermine ainsi si l'aéronef 100 est pris dans une situation d'alerte météorologique, notamment soit parce que l'aéronef 100 est au sein d'un nuage d'orage, soit parce que l'aéronef 100 est entouré de nuages d'orage. Le système ATG 101 détecte la situation d'alerte météorologique grâce aux polygones de la base de données PDWDB 204.

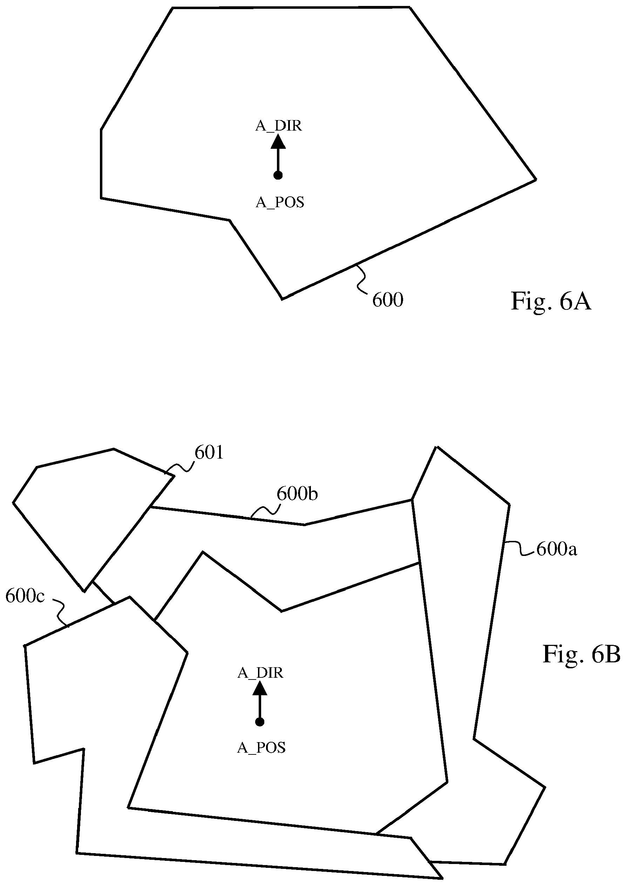

Un premier exemple de situation d'alerte météorologique est schématiquement illustré sur la **Fig. 6A****,** dans lequel l'aéronef 100 est au sein d'un nuage d'orage représenté par un obstacle sous forme de polygone 600.

Un deuxième exemple de situation d'alerte météorologique est schématiquement illustré sur la **Fig. 6B****,** dans lequel l'aéronef 100 est entouré de nuages d'orage représentés par des obstacles sous forme de polygones 600a, 600b, 600c.

Dans un mode de réalisation particulier comme illustré sur la Fig. 6B, le système ATG 101 considère en outre, dans la situation d'alerte météorologique, tout polygone 601 en contact avec un ou plusieurs polygones 600a, 600b, 600c qui entourent l'aéronef 100. De même, dans un mode de réalisation particulier, le système ATG 101 considère en outre, dans la situation d'alerte météorologique, tout polygone 601 en contact avec le polygone 600 au sein duquel est positionné l'aéronef 100.

Dans une étape 304, le système ATG 101 vérifie si, à l'étape 303, il a été déterminé que l'aéronef 100 est, ou pas, dans une situation d'alerte météorologique. Si il a été déterminé que l'aéronef 100 est dans une situation d'alerte météorologique, une étape 306 est effectuée ; sinon, une étape 305 est effectuée.

Dans l'étape 305, le système ATG 101 recherche une trajectoire volable depuis la position courante en vol A_POS de l'aéronef 100 jusqu'à la destination géoréférencée T_POS, en évitant donc les obstacles représentés par les polygones obtenus à l'étape 302. La recherche de trajectoire tient compte de la direction actuelle A_DIR de vol de l'aéronef 100, ainsi que de la direction à suivre T_TRK à destination, et des performances de l'aéronef 100 au regard de son état opérationnel.

Le système ATG 101 démarre la recherche de trajectoire latérale (volable) en définissant deux premiers cercles, de rayon prédéterminé dépendant des performances de l'aéronef 100, tangentiels par rapport à la direction actuelle A_DIR de vol de l'aéronef 100, l'un étant centré à droite, l'autre étant centré gauche, par rapport à la position courante en vol A_POS de l'aéronef 100. L'aéronef 100 peut tourner soit à droite, soit à gauche, par rapport à la direction actuelle A_DIR de vol de l'aéronef 100. Le rayon des premiers cercles est égal au rayon minimum de virage que peut effectuer l'aéronef 100 au regard de son état opérationnel.

Ensuite, le système ATG 101 définit deux deuxièmes cercles, de même rayon prédéterminé dépendant des performances de l'aéronef 100, tangentiels par rapport à la direction à suivre T_TRK à destination, l'un étant centré à droite, l'autre étant centré à gauche, par rapport à la destination géoréférencée T_POS. La direction à suivre T_TRK à destination définit le sens possible de parcours desdits deuxièmes cercles par l'aéronef 100. Selon une configuration, le rayon des deuxièmes cercles est égal au rayon des premiers cercles. Selon une autre configuration, le rayon des deuxièmes cercles est différent du rayon des premiers cercles. Le rayon des deuxièmes cercles est calculé à partir de la vitesse ou des performances de l'aéronef 100 prévues à l'arrivée auxdits deuxièmes cercles.

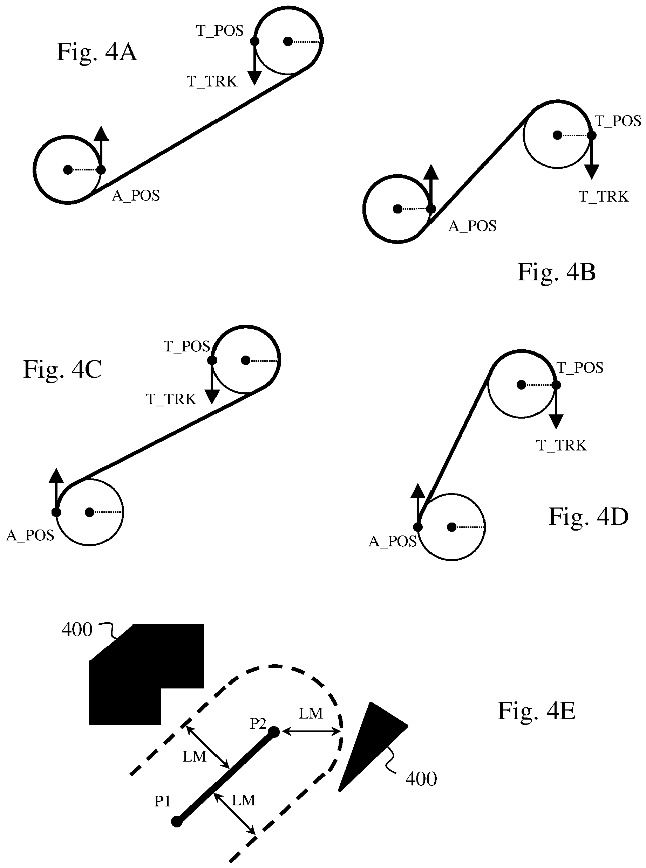

Puis, le système ATG 101 recherche une trajectoire volable tangentielle entre un dit premier cercle et un dit deuxième cercle, en respectant la direction actuelle A_DIR de vol de l'aéronef 100 et la direction à suivre T_TRK à destination. En considérant qu'il n'y a pas d'obstacle entre la position courante en vol A_POS de l'aéronef 100 et la destination géoréférencée T_POS, les trajectoires possibles sont schématiquement illustrées sur les Figs. 4A à 4D.

Sur la **Fig. 4A****,** la trajectoire est telle que l'aéronef 100 effectue un virage à gauche depuis la position courante en vol A_POS de l'aéronef 100, suit le premier cercle centré à gauche par rapport à la position courante en vol A_POS de l'aéronef 100, suit ensuite une tangente vers le deuxième cercle centré à gauche par rapport à la destination géoréférencée T_POS et effectue un virage à gauche en suivant ledit deuxième cercle jusqu'à la destination géoréférencée T_POS. Sur la **Fig. 4B****,** la trajectoire est telle que l'aéronef 100 effectue un virage à gauche depuis la position courante en vol A_POS de l'aéronef 100, suit le premier cercle centré à gauche par rapport à la position courante en vol A_POS de l'aéronef 100, suit ensuite une tangente vers le deuxième cercle centré à droite par rapport à la destination géoréférencée T_POS et effectue un virage à droite en suivant ledit deuxième cercle jusqu'à la destination géoréférencée T_POS. Sur la **Fig. 4C****,** la trajectoire est telle que l'aéronef 100 effectue un virage à droite depuis la position courante en vol A_POS de l'aéronef 100, suit le premier cercle centré à droite par rapport à la position courante en vol A_POS de l'aéronef 100, suit ensuite une tangente vers le deuxième cercle centré à gauche par rapport à la destination géoréférencée T_POS et effectue un virage à gauche en suivant ledit deuxième cercle jusqu'à la destination géoréférencée T_POS. Sur la **Fig. 4D****,** la trajectoire est telle que l'aéronef 100 effectue un virage à droite depuis la position courante en vol A_POS de l'aéronef 100, suit le premier cercle centré à droite par rapport à la position courante en vol A_POS de l'aéronef 100, suit ensuite une tangente vers le deuxième cercle centré à droite par rapport à la destination géoréférencée T_POS et effectue un virage à droite en suivant ledit deuxième cercle jusqu'à la destination géoréférencée T_POS.

Lorsque des obstacles sont présents entre la position courante en vol A_POS de l'aéronef 100 et la destination géoréférencée T_POS, la tangente entre un dit premier cercle et un dit deuxième cercle ne représente pas une trajectoire volable. Le système ATG 101 recherche alors la trajectoire volable par contournement de sommets de polygones représentant les obstacles, tels qu'obtenus à l'étape 302.

Une marge latérale LM doit être respectée latéralement dans le calcul de trajectoire par rapport aux obstacles à éviter, comme illustré sur la **Fig. 4E** où, sur un segment depuis un point P1 jusqu'à un point P2, la marge latérale LM est libre de tout obstacle 400 afin d'assurer un couloir de protection. La marge latérale LM est prédéterminée. La marge latérale LM peut être prédéfinie, ou variable en fonction de l'altitude, de la vitesse, du mode de vol (mode nominal, mode dégradé...) de l'aéronef 100, ou de la zone géographique considérée, par exemple.

Dans le calcul de trajectoire par contournement de sommets de polygones, le système ATG 101 définit un troisième cercle autour des sommets des polygones représentatifs d'obstacles tels qu'obtenus à l'étape 302. Un filtrage peut être appliqué par le système ATG 101 de sorte à ne pas considérer tous les sommets de polygones représentatifs d'obstacles portés à la connaissance du système ATG 101 par les bases de données PDTDB 201, PDMDB 202 et PDWDB 204. Ce troisième cercle a un rayon qui est le maximum entre la marge latérale LM susmentionnée (définissant le couloir de protection) et le rayon minimum de virage dont est capable l'aéronef 100 au vu de ses performances telles que définies dans la base de données PDB 203.

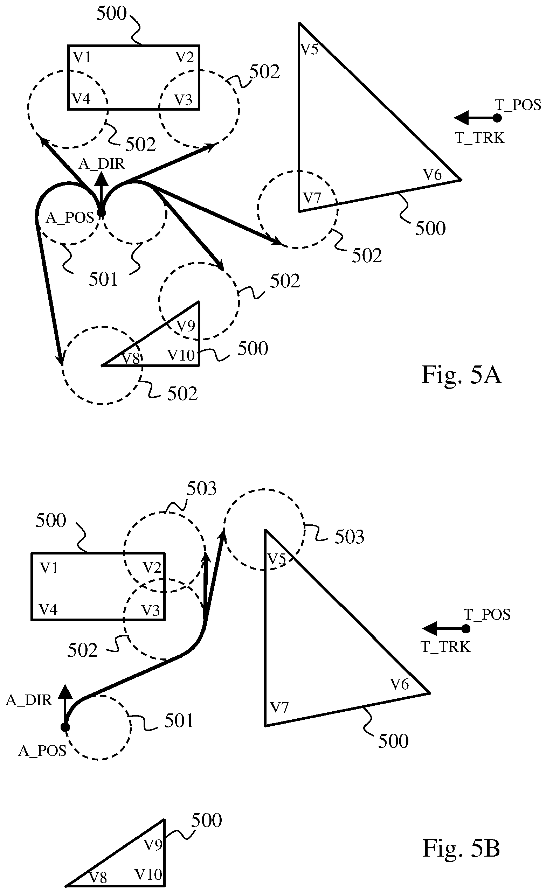

Le système ATG 101 recherche alors une trajectoire volable tangentielle entre un dit premier cercle et un dit troisième cercle, en respectant la direction courante A_DIR de vol de l'aéronef 100. Il est possible de rechercher une trajectoire volable à partir d'un virage à droite, ou d'un virage à gauche. Une dite trajectoire volable doit permettre de contourner le sommet de polygone en question au vu de la direction d'arrivée de l'aéronef 100 sur ledit sommet de polygone (ce qui définit donc le sens de parcours dudit troisième cercle). Un exemple est schématiquement illustré sur la **Fig. 5A****.**

Sur la Fig. 5A, trois obstacles 500 sont représentés à titre purement illustratif. Aucune trajectoire directe volable entre la position courante en vol A_POS de l'aéronef 100 et la destination géoréférencée T_POS, respectant en outre les directions A_DIR et T_TRK, n'existe. Un contournement d'un ou plusieurs obstacles est alors nécessaire. Sur la Fig. 5A sont représentés les premiers cercles 501 susmentionnés. Y apparaissent aussi les troisièmes cercles 502 pour un certain nombre de sommets V3, V4, V7, V8 et V9. Ce sont les sommets de polygones pour lesquels au moins une trajectoire volable tangentielle a été trouvée, comme illustré par les traits gras fléchés sur la Fig. 5A (certaines trajectoires volables tangentielle possibles ne sont pas représentées par souci de clarté du dessin). Ces trajectoires doivent être explorées plus avant, par expansions successives, pour trouver un chemin menant à la destination géoréférencée T_POS. Pour les sommets V1, V2, V5, V6 et V10, aucune trajectoire volable tangentielle n'existe (à cause des obstacles présents et du respect de la marge latérale LM (notamment vis-à-vis du sommet V5).

Le système ATG 101 place chaque trajectoire trouvée, à explorer plus avant, dans une liste L.

Pour explorer plus avant les possibilités d'atteindre la destination géoréférencée, le système ATG 101 extrait une trajectoire candidate de la liste L, par exemple la trajectoire candidate la plus prometteuse au regard d'une heuristique de recherche de chemin. Le système ATG 101 recherche une trajectoire volable tangentielle entre le troisième cercle (cercle de départ d'une expansion, dont le rayon est égal au maximum entre la marge latérale LM et le rayon de virage que peut effectuer l'aéronef 100) sur lequel s'est arrêtée la trajectoire candidate et un dit deuxième cercle, en respectant la direction T_TRK à suivre à l'arrivée. Le système ATG 101 recherche ainsi si tous les obstacles ont été contournés et qu'une trajectoire volable directement jusqu'à la destination géoréférencée existe (dernière branche (« leg » en anglais) de trajectoire). Ce serait par exemple le cas à partir du troisième cercle qui entoure le sommet V5 sur la Fig. 5A, mais pas à partir du sommet V7. Si aucune trajectoire volable ne permet d'atteindre la destination géoréférencée T_POS, le système ATG 101 recherche un autre sommet à contourner qui pourrait rapprocher de la position de la destination T_POS. Le système ATG 101 recherche alors une trajectoire volable tangentielle entre le troisième cercle sur lequel s'est arrêtée la trajectoire candidate et un autre dit troisième cercle, comme schématiquement illustré sur la **Fig. 5B****.** Le sens de parcours du troisième cercle sur lequel s'est arrêtée la trajectoire candidate dépend de la direction d'arrivée de l'aéronef 100 sur ledit troisième cercle. Si une ou plusieurs telles trajectoire sont trouvées, elles sont ajoutées à la liste L.

A noter que lorsque le parcours du troisième cercle sur lequel s'est arrêtée la trajectoire candidate se fait par virage à gauche (resp. à droite), le système ATG 101 exclut toute trajectoire volable vers un autre dit troisième cercle qui impose un virage à droite (resp. à gauche). En effet, une telle trajectoire volable peut exister, mais n'est pas considérée comme étant intéressante. Il n'y a dans ce cas pas de trajectoire tangentielle volable qui respecte le sens de parcours du troisième cercle sur lequel s'est arrêtée la trajectoire candidate. De plus, des trajectoires alternatives plus courtes doivent certainement exister, et donc être présentes dans la liste L, en direction de ces sommets de polygones. Ainsi, sur la Fig. 5B, le système ATG 101 exclut les éventuelles trajectoires qui, depuis le troisième cercle 502 qui entoure le sommet de polygone V3, mènent aux sommets V7 et V9 par exemple.

Un exemple de recherche de trajectoire volable par expansions successives par contournement de sommets de polygones est schématiquement illustré sur la Fig. 5B : parcours d'une partie du premier cercle 501 centré à droite par rapport à la position courante en vol A_POS de l'aéronef 100, puis parcours d'une tangente entre ledit premier cercle 501 et le troisième cercle 502 autour du sommet de polygone V3, puis parcours d'une partie dudit troisième cercle 502 autour du sommet de polygone V3, puis soit parcours d'une tangente entre ledit troisième cercle 502 autour du sommet de polygone V3 et le troisième cercle 503 autour du sommet V5, ou soit parcours d'une tangente entre ledit troisième cercle 502 autour du sommet de polygone V3 et le troisième cercle 503 autour du sommet de polygone V2. Il apparaît sur la Fig. 5B que, à partir de ce troisième cercle 503 autour du sommet V5, la destination géoréférencée T_POS peut être directement atteinte, tout en respectant la direction T_TRK à suivre à destination. Une trajectoire volable devrait donc être trouvée à la prochaine itération d'exploration de cette trajectoire candidate.

Dans un mode de réalisation particulier, le système ATG 101 ajoute une dite trajectoire candidate T1 dans la liste L uniquement si la liste L ne contient pas déjà une trajectoire candidate T2, plus courte, permettant d'atteindre le troisième cercle autour du sommet de polygone auquel s'arrête ladite trajectoire T1. Et dans un mode de réalisation particulier, lorsque le système ATG 101 ajoute une dite trajectoire candidate dans la liste L, le système ATG 101 retire de la liste L toute trajectoire candidate qui s'arrête au troisième cercle du même sommet de polygone mais qui est plus longue que la trajectoire candidate ajoutée.

En procédant ainsi, une trajectoire volable peut être trouvée pour amener l'aéronef 100 depuis la position courante en vol A_POS de l'aéronef 100 jusqu'à la destination géoréférencée T_POS. Et, suite à l'étape 305, la trajectoire volable pour amener l'aéronef 100 depuis la position courante en vol A_POS de l'aéronef 100 jusqu'à la destination géoréférencée T_POS est fournie, et il est mis fin à l'algorithme de la Fig. 3.

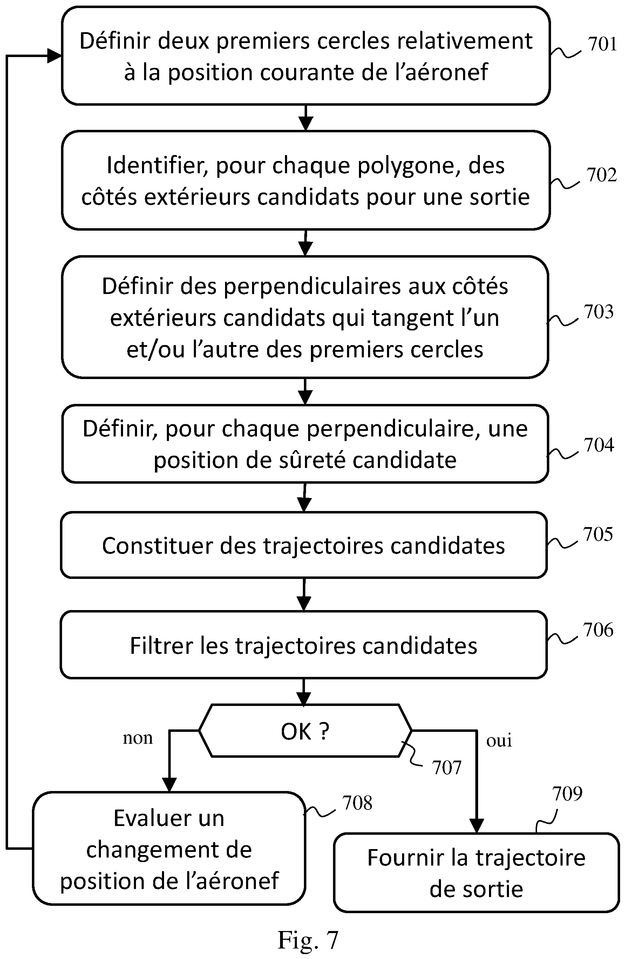

Dans l'étape 306, le système ATG 101 recherche une trajectoire préalable de sortie de la situation d'alerte météorologique. Ainsi, le système ATG 101 calcule une trajectoire volable, du point de vue du relief du terrain et aux besoins militaires dont le survol est interdit, qui permette d'amener l'aéronef 100 à une position de sécurité S_POS (« safety position » en anglais) hors de la situation d'alerte météorologique à partir de laquelle une trajectoire volable jusqu'à la destination référencée peut alors être calculée. Ainsi, priorité est donnée à la sortie de la situation d'alerte météorologique, en évitant d'alourdir le calcul de trajectoire en focalisant inutilement sur la destination géoréférencée dans un premier temps. A la position de sécurité S_POS, la trajectoire préalable de sortie de la situation d'alerte météorologique fournit une indication de direction S_DIR suivie par l'aéronef 100 en atteignant ladite position de sécurité S_POS. La recherche de trajectoire préalable de sortie de la situation d'alerte météorologique est détaillée ci-après en relation avec la Fig. 7.

Puis, une fois que la position de sécurité S_POS et la trajectoire pour y parvenir sont établies, le système ATG 101 recherche, dans une étape 307, une trajectoire volable depuis la position de sécurité S_POS jusqu'à la destination géoréférencée T_POS, en évitant les obstacles représentés par les polygones obtenus à l'étape 302, et en tenant compte des directions S_DIR et T_TRK. L'étape 307 est donc opérée de manière identique à l'étape 305, mais en partant de la position de sécurité S_POS au lieu de la position courant en vol A_POS de l'aéronef 100. La trajectoire volable à considérer est donc la succession de la trajectoire volable depuis la position courante en vol A_POS de l'aéronef 100 jusqu'à la position de sécurité S_POS (trajectoire volable de sortie de la situation d'alerte météorologique), comme déterminée à l'étape 306, puis de la trajectoire volable depuis la position de sécurité S_POS jusqu'à la destination géoréférencée T_POS, comme déterminée à l'étape 307. Et, suite à l'étape 307, la trajectoire volable pour amener l'aéronef 100 depuis la position courante en vol A_POS de l'aéronef 100 jusqu'à la destination géoréférencée T_POS est fournie, et il est mis fin à l'algorithme de la Fig. 3.

La **Fig. 7** illustre schématiquement un algorithme de calcul de trajectoire latérale visant à sortir l'aéronef 100 d'une situation d'alerte météorologique, telle qu'illustrée sur les Figs. 6A et 6B.

Dans une étape 701, le système ATG 101 définit deux premiers cercles 501, de rayon prédéterminé dépendant des performances de l'aéronef 100, tangentiels par rapport à la direction actuelle A_DIR de vol de l'aéronef 100, l'un étant centré à droite, l'autre étant centré à gauche, par rapport à la position courante en vol A_POS de l'aéronef 100. L'aéronef 100 peut tourner soit à droite, soit à gauche, par rapport à la direction actuelle A_DIR de vol de l'aéronef 100. Le rayon des premiers cercles est égal au rayon minimum de virage que peut effectuer l'aéronef 100 au regard de son état opérationnel. Ces deux premiers cercles 501 sont donc les mêmes que ceux définis dans le cadre de l'étape 305 décrite ci-dessus. Les performances de l'aéronef 100 peuvent être toutefois amoindries du fait de la situation d'alerte météorologique, notamment lorsque l'aéronef 100 est au sein d'un nuage d'orage comme illustré sur la Fig. 6A.

Dans une étape 702, le système ATG 101 identifie, pour chaque polygone de la situation d'alerte météorologique, des côtés extérieurs candidats 800 qui sont candidats pour une sortie de l'aéronef 100. Les côtés extérieurs candidats 800 sont les côtés extérieurs des polygones par rapport à la position courante en vol A_POS de l'aéronef 100, c'est-à-dire les côtés de polygones au-delà desquels l'aéronef 100 sort de tout obstacle météorologique en partant de la position courante en vol A_POS de l'aéronef 100. Les polygones de la situation d'alerte météorologique sont représentatifs d'obstacles météorologiques à franchir par l'aéronef 100 pour sortir de la situation d'alerte météorologique (voir Figs. 6A et 6B).

Dans une étape 703, le système ATG 101 définit des droites 801 qui sont perpendiculaires aux côtés extérieurs candidats et qui tangentent l'un et/ou l'autre des premiers cercles 501. Il convient de noter que les droites 801 peuvent ne pas former d'intersection avec le segment formé par un dit côté extérieur candidat, mais former une intersection avec la droite qui prolonge ledit côté extérieur candidat (intersection dans l'axe dudit côté extérieur candidat mais à l'extérieur dudit côté extérieur candidat).

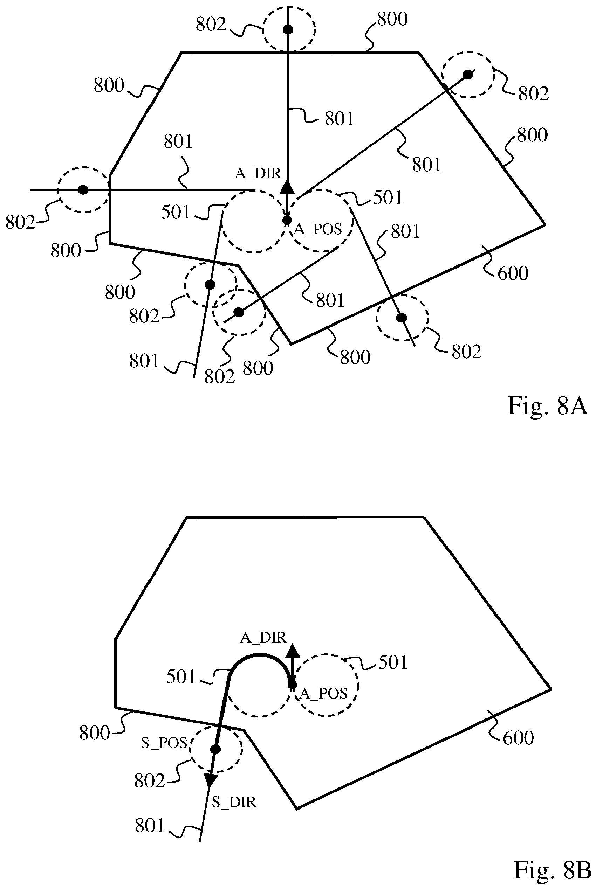

Dans une étape 704, le système ATG 101 détermine, pour chaque droite 801, une position de sécurité candidate. La position de sécurité candidate est localisée sur ladite droite 801 à une distance au moins égale à la marge latérale LM, et assure qu'aucun obstacle, parmi les obstacles tels qu'obtenus à l'étape 302, n'est présent dans un rayon égal à la marge latérale LM (espace de sécurité représenté par des cercles 802 sur la Fig. 8A).

Dans une étape 705, le système ATG 101 constitue des trajectoires volables candidates, pour sortir l'aéronef 100 de la situation d'alerte météorologique, entre la position courante A_POS de l'aéronef 100 et chaque position de sécurité candidate en suivant la droite 801 sur laquelle est localisée la position de sécurité candidate en question et préalablement une portion de premier cercle 501 jusqu'à ce que ledit premier cercle 501 tangente la droite 801 en question.

Un exemple de trajectoires candidates pour sortir de la situation d'alerte météorologique de la Fig. 6A est schématiquement représenté sur la **Fig. 8A****.** Un exemple similaire peut être aisément dérivé à partir de la Fig. 6B, en utilisant les côtés extérieurs des polygones 600a, 600b, 600c (et potentiellement du polygone 601) de la Fig. 6B. Dans ce cas, dans un mode de réalisation particulier permettant de faciliter les calculs de trajectoire candidates, le système ATG 101 fusionne les polygones 600a, 600b, 600c (et potentiellement du polygone 601) entourant l'aéronef 100, avant d'identifier les côtés extérieurs candidats 800.

Dans une étape 706, le système ATG 101 filtre les trajectoires volables candidates, de sorte à exclure de la recherche de trajectoire de sortie de la situation d'alerte météorologique toute trajectoire candidate qui ne garantit pas la marge latérale LM, par rapport aux obstacles de relief et potentiellement aux zones miliaires interdites de survol.

Il est considéré ici que des obstacles de relief ou de zones militaires interdites au survol peuvent être présents dans l'environnement de la situation d'alerte météorologique. Le système ATG 101 peut toutefois être utilisé alors que seuls des obstacles météorologiques sont présents. Alors, chaque position de sécurité candidate est localisée sur une dite droite 801 à une distance au moins égale à la marge latérale LM en dehors de tout polygone représentatif d'un obstacle météorologique de la situation d'alerte météorologique.

Dans une étape 707, le système ATG 101 vérifie s'il existe, après filtrage, au moins une trajectoire possible de sortie de la situation d'alerte météorologique. Si tel est le cas, une étape 709 est effectuée ; sinon, une étape 708 est effectuée.

Dans l'étape 708, le système ATG 101 évalue un changement de position de l'aéronef 100. Un changement de position de l'aéronef 100 peut permettre d'obtenir un nouvel ensemble de dites droites 801 perpendiculaires aux côtés extérieurs des polygones de la situation d'alerte météorologique afin de trouver une trajectoire de sortie viable. Le changement de position peut consister à considérer l'aéronef à une position plus avant dans la direction A_DIR, ou à une position suite à un virage à droite par rapport à la position courante en vol A_POS de l'aéronef 100, ou à une position suite à un virage à gauche par rapport à la position courante en vol A_POS de l'aéronef 100, dès lors que la trajectoire pour atteindre cette position depuis la position courante en vol A_POS de l'aéronef 100 garantit la marge latérale LM par rapport aux obstacles de relief et potentiellement aux zones miliaires interdites de survol. L'étape 701 est ensuite répétée.

Dans une variante de réalisation, s'il existe des obstacles moins prioritaires que les obstacles météorologiques (par exemple, des zones militaires interdites de survol) qui ont empêché de définir une trajectoire de sortie viable, alors le système ATG 101 peut réitérer la recherche de trajectoire de sortie viable sans considérer ces obstacles moins prioritaires que les obstacles météorologiques et permettre de les enfreindre. Les obstacles plus prioritaires que les obstacles météorologiques (par exemple, des obstacles de terrain) ne doivent cependant pas être écartés de la recherche de trajectoire de sortie viable.

Dans une variante de réalisation, s'il existe une trajectoire volable candidate qui a été filtrée à l'étape 706 à cause de conflits avec un obstacle de terrain ou de zone militaire interdite de survol, le système ATG 101 modifie ladite trajectoire volable candidate en effectuant un contournement d'au moins un sommet du polygone représentatif de l'obstacle en question par définition d'un dit troisième cercle autour dudit au moins un sommet, et en recherchant la droite 801 qui est perpendiculaire au côté extérieur candidat 800 considéré et qui tangente ledit troisième cercle.

Dans l'étape 709, le système ATG 101 dispose d'au moins une trajectoire volable permettant de sortir de la situation d'alerte météorologique. Lorsque le système ATG 101 dispose de plusieurs trajectoires volables candidates permettant de sortir de la situation d'alerte météorologique (ce qui est généralement le cas), le système ATG 101 effectue un choix parmi les trajectoires volables candidates, en sélectionnant la trajectoire volable candidate la plus prometteuse au regard d'une heuristique où minimiser un temps d'exposition de l'aéronef 100 dans tout obstacle météorologique de la situation d'alerte météorologique prévaut.

A l'issue de l'étape 709, le système ATG 101 fournit la trajectoire permettant de sortir de la situation d'alerte météorologique jusqu'à la position de sécurité S_POS définie pour la trajectoire retenue. Il est alors mis fin à l'algorithme de la Fig. 7. La recherche de trajectoire jusqu'à la destination géoréférencée T_POS peut alors être réalisée à partir de ladite position de sécurité S_POS en tenant compte de la direction S_DIR imposée par le suivi de cette trajectoire permettant de sortir de la situation d'alerte météorologique.

L'algorithme de la Fig. 7 a été présenté ci-dessous comme faisant partie d'une recherche de trajectoire latérale volable depuis la position courante en vol A_POS de l'aéronef 100 jusqu'à la destination géoréférencée T_POS, pour gérer le cas où, à la position courante en vol A_POS de l'aéronef 100, ledit aéronef 100 est dans une situation d'alerte météorologique. L'algorithme de la Fig. 7 peut toutefois être déclenché pour trouver une trajectoire volable appropriée pour simplement sortir l'aéronef 100 de la situation d'alerte météorologique et l'amener à une position de sécurité (S_POS).

La **Fig. 9** illustre schématiquement un exemple d'architecture matérielle du système ATG 101, qui comprend alors, reliés par un bus de communication 910 : un processeur ou CPU (« Central Processing Unit » en anglais) 901 ; une mémoire vive RAM (« Random Access Memory » en anglais) 902 ; une mémoire morte ROM (« Read Only Memory » en anglais) 903, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 904 ; au moins une interface de communication 905 permettant au système ATG 101 d'interagir avec des équipements de l'avionique de l'aéronef 100.

Le processeur 901 est capable d'exécuter des instructions chargées dans la RAM 902 à partir de la ROM 903, d'une mémoire externe (non représentée), d'un support de stockage, tel qu'une carte SD, ou d'un réseau de communication (non représenté). Lorsque le système ATG 101 est mis sous tension, le processeur 901 est capable de lire de la RAM 902 des instructions et de les exécuter. Ces instructions forment un programme d'ordinateur causant une implémentation, par le processeur 901, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système ATG 101 comprend de la circuiterie électronique agencée et configurée pour implémenter les comportements, étapes et algorithmes décrits ici.

## Revendications

1. Procédé de génération de trajectoire pour sortir un aéronef (100) en vol d'une situation d'alerte météorologique, le procédé étant implémenté par un système de génération automatique de trajectoire (101) sous forme de circuiterie électronique, le procédé comprenant les étapes suivantes :
- obtenir un ou plusieurs polygones de la situation d'alerte météorologique qui sont représentatifs d'au moins un obstacle météorologique respectif à franchir ;
- définir (701) deux cercles tangentiels (501) par rapport à une direction actuelle de vol (A_DIR) de l'aéronef (100), l'un étant centré à droite, l'autre étant centré à gauche, par rapport à une position courante en vol (A_POS) de l'aéronef (100), le rayon des cercles (501) étant un rayon minimum de virage que peut effectuer l'aéronef (100) au regard de son état opérationnel ;
- identifier (702), pour chaque polygone de la situation d'alerte météorologique, des côtés extérieurs candidats (800) qui sont candidats pour une sortie de l' aéronef (100) de la situation d'alerte météorologique ;
- définir (703) des droites (801) qui sont perpendiculaires aux côtés extérieurs candidats (800) et qui tangentent l'un et/ou l'autre des cercles (501) ;
- déterminer (704), pour chaque droite (801), une position de sécurité candidate, qui est localisée sur ladite droite (801) à une distance au moins égale à une marge latérale prédéterminée en dehors de tout polygone représentatif d'un obstacle météorologique de la situation d'alerte météorologique ;
- constituer (705) des trajectoires candidates, pour sortir l'aéronef (100) de la situation d'alerte météorologique, entre la position courante en vol (A_POS) de l'aéronef (100) et chaque position de sécurité candidate en suivant la droite (801) sur laquelle est localisée la position de sécurité candidate en question et préalablement une portion de cercle (501) jusqu'à ce que ledit cercle (501) tangente la droite en question ; et
- effectuer (709) un choix parmi les trajectoires candidates, en sélectionnant la trajectoire candidate la plus prometteuse au regard d'une heuristique où minimiser un temps d'exposition de l'aéronef (100) dans tout obstacle météorologique de la situation d'alerte météorologique prévaut.

2. Procédé selon la revendication 1, dans lequel la situation d'alerte météorologique est formée d'un obstacle météorologique dans lequel se trouve la position courante en vol (A_POS) de l'aéronef (100), la position courante en vol (A_POS) de l'aéronef (100) étant ainsi au sein d'un polygone de la situation d'alerte météorologique.

3. Procédé selon la revendication 1, dans lequel la situation d'alerte météorologique est formée de plusieurs obstacles météorologiques entourant la position courante en vol (A_POS) de l'aéronef (100), la position courante en vol (A_POS) de l'aéronef (100) étant ainsi entourée de polygones (600a, 600b, 600c) de la situation d'alerte météorologique.

4. Procédé selon la revendication 3, comportant l'étape suivante :
- fusionner les polygones (600a, 600b, 600c) de la situation d'alerte météorologique entourant la position courante en vol (A_POS) de l'aéronef (100), avant d'identifier les côtés extérieurs candidats.

5. Procédé selon l'une quelconque des revendications 1 à 4, comportant en outre les étapes suivantes :
- obtenir un ou plusieurs autres polygones qui sont représentatifs d'au moins un obstacle de relief ou de zone militaire interdite de survol ;
le procédé étant tel que chaque position de sécurité candidate est localisée à une distance au moins égale à la marge latérale prédéterminée (LM) de tout polygone.

6. Procédé selon la revendication 5, comportant l'étape suivante :
- filtrer (706) les trajectoires candidates, de sorte à exclure toute trajectoire candidate qui ne garantit pas la marge latérale prédéterminée (LM), par rapport à tout dit autre polygone.

7. Procédé de génération de trajectoire pour amener un aéronef (100) en vol depuis une position courante en vol (A_POS) de l'aéronef (100) à une destination géoréférencée (T_POS), le procédé étant implémenté par un système de génération automatique de trajectoire (101) sous forme de circuiterie électronique, le procédé comprenant les étapes suivantes :
- obtenir (302) des polygones représentatifs d'obstacles potentiellement rencontrés par l'aéronef (100) depuis la position courante (A_POS) de l'aéronef (100) jusqu'à la destination géoréférencée (T_POS) ;
- lorsque la position courante en vol (A_POS) de l'aéronef (100) n'est pas dans une situation d'alerte météorologique, rechercher (305) une trajectoire pour amener l'aéronef (100) depuis la position courante en vol (A_POS) de l'aéronef (100) à la destination géoréférencée (T_POS), par contournements de sommets des polygones obtenus, en maintenant une marge latérale prédéterminée (LM) avec tout polygone ;
- lorsque la position courante en vol (A_POS) de l'aéronef (100) est dans une situation d'alerte météorologique, exécuter le procédé selon l'une quelconque des revendications 1 à 6 pour obtenir une trajectoire pour amener l'aéronef (100) depuis la position courante en vol (A_POS) de l'aéronef (100) à une position de sécurité (S_POS), et rechercher une trajectoire pour amener l'aéronef (100) depuis la position de sécurité (S_POS) à la destination géoréférencée (T_POS), par contournements de sommets des polygones obtenus, en maintenant une marge latérale prédéterminée (LM) avec tout polygone.

8. Système de génération automatique de trajectoire (101) configuré pour générer automatiquement une trajectoire pour sortir un aéronef (100) en vol d'une situation d'alerte météorologique, le système de génération automatique de trajectoire (101) étant sous forme de circuiterie électronique configurée pour :
- obtenir un ou plusieurs polygones de la situation d'alerte météorologique qui sont représentatifs d'au moins un obstacle météorologique respectif à franchir ;
- définir (701) deux cercles (501) tangentiels par rapport à une direction actuelle de vol (A-DIR) de l'aéronef (100), l'un étant centré à droite, l'autre étant centré à gauche, par rapport à une position courante en vol (A_POS) de l'aéronef (100), le rayon des cercles (501) étant un rayon minimum de virage que peut effectuer l'aéronef (100) au regard de son état opérationnel ;
- identifier (702), pour chaque polygone de la situation d'alerte météorologique, des côtés extérieurs candidats (800) qui sont candidats pour une sortie de l'aéronef (100) de la situation d'alerte météorologique ;
- définir (703) des droites (801) qui sont perpendiculaires aux côtés extérieurs candidats (800) et qui tangentent l'un et/ou l'autre des cercles (501) ;
- déterminer (704), pour chaque droite, une position de sécurité candidate, qui est localisée sur ladite droite (801) à une distance au moins égale à une marge latérale prédéterminée (LM) en dehors de tout polygone représentatif d'un obstacle météorologique de la situation d'alerte météorologique ;
- constituer (705) des trajectoires candidates, pour sortir l'aéronef (100) de la situation d'alerte météorologique, entre la position courante en vol (A_POS) de l'aéronef (100) et chaque position de sécurité candidate en suivant la droite (801) sur laquelle est localisée la position de sécurité candidate en question et préalablement une portion de cercle (501) jusqu'à ce que ledit cercle (501) tangente la droite en question ; et
- effectuer (709) un choix parmi les trajectoires candidates, en sélectionnant la trajectoire candidate la plus prometteuse au regard d'une heuristique où minimiser un temps d'exposition de l'aéronef (100) dans tout obstacle météorologique de la situation d'alerte météorologique prévaut.

9. Système de génération automatique de trajectoire (101) configuré pour générer automatiquement une trajectoire pour amener un aéronef (100) en vol depuis une position courante en vol (A_POS) de l'aéronef (100) à une destination géoréférencée (T_POS), le système de génération automatique de trajectoire (101) étant sous forme de circuiterie électronique configurée pour :
- obtenir (302) des polygones représentatifs d'obstacles potentiellement rencontrés par l'aéronef (100) depuis la position courante (A_POS) de l'aéronef (100) jusqu'à la destination géoréférencée (T_POS) ;
- lorsque la position courante en vol (A_POS) de l'aéronef (100) n'est pas dans une situation d'alerte météorologique, rechercher (305) une trajectoire pour amener l'aéronef (100) depuis la position courante en vol (A_POS) de l'aéronef (100) à la destination géoréférencée (T_POS), par contournements de sommets des polygones obtenus, en maintenant une marge latérale prédéterminée (LM) avec tout polygone ;
- lorsque la position courante en vol (A_POS) de l'aéronef (100) est dans une situation d'alerte météorologique, la circuiterie électronique est configurée selon le système de génération automatique de trajectoire (101) de la revendication 8 pour obtenir une trajectoire pour amener l'aéronef (100) depuis la position courante en vol (A_POS) de l'aéronef (100) à une position de sécurité (S_POS), et la circuiterie électronique est en outre configurée pour rechercher (307) une trajectoire pour amener l'aéronef (100) depuis la position de sécurité (S_POS) à la destination géoréférencée (T_POS), par contournements de sommets des polygones obtenus, en maintenant une marge latérale prédéterminée (LM) avec tout polygone.

10. Aéronef (100) comportant un système de génération automatique de trajectoire (101) selon la revendication 8 ou 9.
